# EUROPÄISCHE PATENTSCHRIFT

(11) **EP 3 797 943 B1**
(45) Veröffentlichungstag und Bekanntmachung des Hinweises auf die Patenterteilung: **01.11.2023**
(21) Anmeldenummer: 20194120.0
(22) Anmeldetag: 02.09.2020
(51) Int. Cl.: B25J 15/04, B25J 19/00

(54) **HANDHABUNGSANLAGE**
HANDLING INSTALLATION
INSTALLATION DE MANUTENTION

(30) Priorität: 26.09.2019 DE 102019125915
(43) Veröffentlichungstag der Anmeldung: 31.03.2021
(73) Patentinhaber: J. Schmalz GmbH, 72293 Glatten (DE)
(72) Erfinder: Kübler, Patrick, 72202 Nagold (DE); Markovits Hoopii, Sven, 72250 Freudenstadt (DE); Sacha, Michael, 72290 Loßburg (DE)
(74) Vertreter: DREISS Patentanwälte PartG mbB

(56) Entgegenhaltungen:
- DE-A1-102017 122 180
- DE-U1- 8 621 671
- JP-A- S6 034 282
- JP-A- S62 282 891

## Beschreibung

Die Erfindung betrifft eine Handhabungsanlage zum Handhaben von Gegenständen.

Solche Handhabungsanlagen umfassen üblicherweise einen Roboterarm und ein mit dem Roboterarm mechanisch verbundenes Greifermodul zum Greifen eines Gegenstands. Das Greifermodul ist auch elektrisch mit dem Roboterarm verbunden, z.B. zur Energieübertragung, zur Übertragung von Steuersignalen und/oder zur Übertragung von Messsignalen. Handhabungsanlagen dieser Art dienen zum flexiblen Handhaben von Gegenständen und finden beispielsweise zum Kommissionieren von Waren in Warenlagern Verwendung.

Zur Befestigung des Greifermoduls an dem Roboterarm ist es bekannt, eine Flanschplatte vorzusehen, welche einerseits mit dem Roboterarm verschraubt ist und andererseits mit dem Greifermodul verschraubt ist. Eine elektrische Verbindung zwischen Greifermodul und Roboterarm erfolgt bei solchen Handhabungsanlagen dann üblicherweise über eine außenliegende Kabelverbindung zwischen Greifermodul und Roboterarm.

Ferner sind Handhabungsanlagen bekannt, bei denen das Greifermodul und der Roboterarm jeweils mit einer Flanschplatte verschraubt sind, wobei die Flanschplatten dazu ausgebildet sind, eine elektrische Verbindung zwischen dem Greifermodul und dem Roboterarm herzustellen. Die beiden Flanschplatten können dann - zur Befestigung des Greifermoduls an dem Roboterarm - über entsprechende Verschlussmittel miteinander verbunden werden.

Es sind zudem Handhabungsanlagen bekannt, bei denen das Greifermodul und der Roboterarm über einen Bajonettverschluss miteinander verbunden sind, bspw. aus DE 86 21 671 U1, JP S60 34282 A oder JP S62 282891 A. DE 86 21 671U1 offenbart beispielsweise eine Wechselvorrichtung zum Anschließen eines Greifers an einen Industrieroboter, wobei ein Verriegelungsmotor einen verdrehbar in einem Anschlussteil gelagerten Ring antreibt, der Bajonettzähne aufweist. Nach dem Absenken des Anschlusselementes auf einen Kupplungsteil wird der Ring verdreht und seine Bajonettzähne greifen unter Gegenzähne eines Verriegelungspilzes am Kupplungsteil. Anschlussteil und Kupplungsteil weisen Steckkontakte und entsprechende Steckdosen zum Herstellen einer elektrischen Verbindung auf.

Bei den bekannten Handhabungsanlagen ist eine Installation des Greifermoduls an dem Roboterarm vergleichsweise aufwändig, da mehrere Handgriffe zur mechanischen und elektrischen Verbindung des Greifermoduls mit dem Roboterarm erforderlich sind.

Die Erfindung beschäftigt sich mit der Aufgabe, die Installation eines Greifermoduls an einem Roboterarm zu vereinfachen. Außerdem ist eine flexible Nutzung wünschenswert.

Diese Aufgabe wird durch eine Handhabungsanlage mit den Merkmalen des Anspruchs 1 gelöst.

Die Handhabungsanlage umfasst einen Roboterarm mit einem Endflansch, ein Greifermodul mit wenigstens einem Endeffektor zum Greifen des Gegenstands, und eine zwischen Roboterarm und Greifermodul angeordnete oder anordenbare Flanschplatte.

Bei dem Roboterarm kann es sich beispielsweise um einen Arm eines Industrieroboters, insbesondere eines Leichtbauroboters, handeln. Im Allgemeinen ist aber denkbar, dass der Begriff Roboterarm auch andere Arten von Aktoren umfasst, z.B. Linearantrieb in Maschinen. Mit Endflansch ist insbesondere ein an dem freien Ende des Roboterarms (endständig) angeordneter Flansch gemeint.

Die Flanschplatte ist mit dem Endflansch des Roboterarms über eine erste Verbindungseinrichtung verbunden oder verbindbar. Vorzugsweise ist die erste Verbindungseinrichtung als Schraubenverbindung ausgebildet. Dann kann die Flanschplatte insbesondere entsprechende Schraubenaufnahmen zur Aufnahme von Schraubenelementen aufweisen. Eine Anzahl und/oder relative Anordnung der Schraubenaufnahmen ist insbesondere in Abhängigkeit einer Ausgestaltung des Endflanschs eines verwendeten Robotertyps ausgebildet.

Die Flanschplatte ist ferner mit dem Greifermodul über eine zweite Verbindungseinrichtung verbunden oder verbindbar. Das Greifermodul ist über eine elektrische Kontakteinrichtung mit dem Roboterarm elektrisch verbunden oder verbindbar. Die elektrische Kontakteinrichtung ist insbesondere dazu ausgebildet, das Greifermodul mit Strom zu versorgen und/oder elektrische Signale (bspw. Steuersignale, Sensorsignale, etc.) zwischen Roboterarm und Greifermodul zu übertragen.

Die zweite Verbindungseinrichtung ist als Bajonettverschluss ausgebildet. Der Bajonettverschluss umfasst einen ersten Bajonettabschnitt, welcher an dem Greifermodul angeordnet ist. Der Bajonettverschluss umfasst ferner einen zweiten Bajonettabschnitt, welcher an der Flanschplatte angeordnet ist. Der erste Bajonettabschnitt und der zweite Bajonettabschnitt sind entlang einer Steckachse in eine Steckkonfiguration ineinander einsteckbar. Insbesondere ist der zweite Bajonettabschnitt in Form eines Aufnahmeteils ausgebildet und der erste Bajonettabschnitt ist in Form eines in das Aufnahmeteil einsteckbaren Einsteckteils ausgebildet.

Der Bajonettverschluss ist nach Einstecken des ersten und des zweiten Bajonettabschnitts, also ausgehend von der Steckkonfiguration, durch gegenseitiges Verdrehen des ersten und des zweiten Bajonettabschnitts um eine, insbesondere entlang der Steckachse verlaufende, Drehachse verriegelbar. (Verriegelungskonfiguration). Der Bajonettverschluss kann insofern durch gegenseitiges Verdrehen der Flanschplatte und des Greifermoduls um die Drehachse verriegelt werden. In der Verriegelungskonfiguration ist dann eine Relativbewegung des Greifermoduls und Flanschplatte in einer Richtung entlang der Steckachse blockiert, Flanschplatte und Greifermodul können also nicht entlang der Steckachse voneinander getrennt werden.

Die elektrische Kontakteinrichtung umfasst wenigstens ein elektrisches Kontaktfeld, welches an dem Greifermodul angeordnet ist und welches mit einem elektrischen Anschluss des Greifermoduls elektrisch verbunden oder verbindbar ist.

Die elektrische Kontakteinrichtung umfasst ferner wenigstens ein elektrisches Gegenkontaktfeld, welches an der Flanschplatte angeordnet ist und welches mit einem elektrischen Anschluss des Roboterarms elektrisch verbunden oder verbindbar ist. Es ist beispielsweise denkbar, dass das wenigstens eine elektrische Gegenkontaktfeld über eine Kabelverbindung mit einer Anschlussbuchse des Roboterarms verbunden ist. Es ist auch denkbar, dass das wenigstens eine elektrische Gegenkontaktfeld über eine entlang der Steckachse wirksame elektrische Steckkontaktverbindung mit einem entsprechenden Anschlussfeld des Endflanschs des Roboterarms verbunden ist.

Das wenigstens eine elektrische Kontaktfeld und das wenigstens eine elektrische Gegenkontaktfeld sind derart ausgebildet und angeordnet, dass das wenigstens eine elektrische Kontaktfeld und das wenigstens eine elektrische Gegenkontaktfeld, beim Verbinden der Flanschplatte und des Greifermoduls mittels des Bajonettverschlusses, eine elektrische Verbindung miteinander und somit zwischen der Flanschplatte und dem Greifermodul herstellen.

Beim Verbinden der Flanschplatte und des Greifermoduls mittels des Bajonettverschlusses wird insofern sowohl eine mechanische als auch eine elektrische Verbindung zwischen dem Greifermodul und dem Roboterarm hergestellt. Bei einer solchen Handhabungsanlage ist also nur ein Handgriff (Stecken, Drehen) zur Installation des Greifermoduls an dem Roboterarm erforderlich. Hierdurch kann ein wesentlich schnellerer Wechsel eines Greifermoduls durchgeführt werden.

Insbesondere ist es nicht erforderlich, zusätzliche Kabel zwischen Roboterarm und Greifermodul anzuschließen.

Hierdurch wird nicht nur eine Installation des Greifermoduls vereinfacht, es lässt sich sogar auf einfache Weise ein automatischer Greifermodulwechsel realisieren, da lediglich vergleichsweise einfache Relativbewegungen (lineare Bewegung zum Einstecken der Bajonettabschnitte, Drehbewegung zum Verriegeln des Bajonettverschlusses) durchgeführt werden müssen. Zudem vermeidet eine solche Ausgestaltung der Handhabungsanlage, dass Kabel eine Störkontur beim Handhaben von Gegenständen bilden, was insbesondere beim Greifen von Gegenständen aus einem Behälter mit einer Mehrzahl von Gegenständen ("binpicking") zu Problemen führen kann.

Vorzugsweise ist die Flanschplatte roboterseitig individuell an einen bestimmten Robotertyp angepasst (bspw. durch Anpassen einer Anzahl und Anordnung von Schraubenbohrungen, siehe oben). Greifermodulseitig ist die Flanschplatte jedoch vorzugsweise mit einem standardisierten Bajonettabschnitt versehen. Die Flanschplatte dient insofern als eine Art Zwischenadapter. Dies ermöglicht es, ein Greifermodul auf einfache und kostengünstige Weise an verschiedenen Robotern zu befestigen. Es wird somit trotz hoher Variantenvielfalt an Robotern nur eine Variante des kostenintensiven Greifermoduls benötigt.

Das wenigstens eine elektrische Kontaktfeld weist eine Mehrzahl von, insbesondere zueinander beabstandeten, Kontaktelementen auf. Das wenigstens eine elektrische Gegenkontaktfeld weist eine Mehrzahl von Gegenkontaktelementen auf, wobei ein Kontaktelement jeweils einem korrespondierenden Gegenkontaktelemente zur Herstellung einer elektrischen Verbindung zugeordnet ist. Eine solche Ausgestaltung ermöglicht es, unterschiedliche elektrische Signale (Stromversorgung, Steuersignale, Sensorsignale, etc.) voneinander unabhängig zu übertragen. Bei den Kontaktelementen kann es sich bspw. um Kontaktstifte handeln. Dann sind die Gegenkontaktelemente insbesondere als korrespondierende Stiftaufnahmen ausgebildet. Es ist auch eine umgekehrte Anordnung möglich.

Die Kontaktelemente und die Gegenkontaktelemente sind derart ausgebildet und angeordnet, dass ein jeweiliges Kontaktelement mit dem ihm zugeordneten Gegenkontaktelement beim Überführen des Bajonettverschlusses aus der Steckkonfiguration in die Verriegelungskonfiguration eine elektrische Verbindung herstellt, insbesondere bereits vor Erreichen der Verriegelungskonfiguration. Insofern kann das Greifermodul bereits im Zuge einer gegenseitigen Verdrehbewegung des Greifermoduls und der Flanschplatte elektrisch kontaktiert werden. Hierdurch kann sichergestellt werden, dass auch dann eine elektrische Verbindung zwischen dem Greifermodul und dem Roboterarm hergestellt ist, wenn der Bajonettverschluss nicht vollständig in die Verriegelungskonfiguration überführt wurde, bspw. bei nicht sachgerechter Montage.

Insbesondere ist es bevorzugt, wenn ein jeweiliges Kontaktelement mit dem ihm zugeordneten Gegenkontaktelement bereits in der Steckkonfiguration eine elektrische Verbindung herstellt und diese elektrische Verbindung beim Überführen des Bajonettverschlusses aus der Steckkonfiguration in die Verriegelungskonfiguration - also beim gegenseitigen Verdrehen des Greifermoduls und der Flanschplatte um die Drehachse - hergestellt bleibt. Bei einer solchen Ausgestaltung wird insbesondere sichergestellt, dass ein Kontaktelement von Anfang an mit dem ihm zugeordneten Gegenkontaktelement verbunden ist, sodass bereits in der Steckkonfiguration elektrische Signale zwischen dem Roboterarm und dem Greifermodul übertragen werden können.

Zu diesem Zweck ist es besonders bevorzugt, wenn die Kontaktelemente als Kontaktstifte, insbesondere als Federkontaktstifte, ausgebildet sind und die Gegenkontaktelemente als Stiftaufnahmen ausgebildet sind. Alternativ können auch die Kontaktelemente als Stiftaufnahmen ausgebildet sein und die Gegenkontaktelemente als Kontaktstifte, insbesondere Federkontaktstifte, ausgebildet sein. Dabei ist es bevorzugt, wenn eine jeweilige Stiftaufnahme derart flächig erstreckt ist, dass der ihr zugeordnete Kontaktstift beim Überführen des Bajonettverschlusses aus der Steckkonfiguration in die Verriegelungskonfiguration stets in elektrischem Kontakt mit der Stiftaufnahme steht.

Insbesondere nimmt eine Breite der Stiftaufnahme entlang eines Bewegungswegs, welchen der ihr zugeordnete Kontaktstift beim Überführen des Bajonettverschlusses aus der Steckkonfiguration in die Verriegelungskonfiguration zurückgelegt, zu. Hierdurch kann auch im Falle einer mechanischen Deformation eines Kontaktstifts im Zuge der Bewegung entlang des Bewegungswegs ein sicherer Kontakt zwischen Kontaktstift und Stiftaufnahme gewährleistet werden. Insbesondere sind die Stiftaufnahmen bogenförmig um die Drehachse ausgebildet.

Ferner ist es bevorzugt, wenn das wenigstens eine elektrische Kontaktfeld drehfest um die Drehachse an dem Greifermodul angeordnet ist und wenn das wenigstens eine elektrische Gegenkontaktfeld drehfest (insbesondere nicht verdrehbar) um die Drehachse an der Flanschplatte angeordnet ist. Bei einem gegenseitigen Verdrehen der Flanschplatte und des Greifermoduls um die Drehachse wird insofern das wenigstens eine elektrische Kontaktfeld nicht relativ zu dem Greifermodul verdreht und das wenigstens eine elektrische Gegenkontaktfeld wird nicht relativ zu der Flanschplatte verdreht. Eine solche Ausgestaltung ohne drehbewegliche Kontaktfelder ist besonders robust und wartungsarm.

Insbesondere ist das wenigstens eine elektrische Kontaktfeld und das wenigstens eine elektrische Gegenkontaktfeld zu der Drehachse radial beabstandet angeordnet. Insofern werden das wenigstens eine elektrische Kontaktfeld und das wenigstens eine elektrische Gegenkontaktfeld bei einem gegenseitigen Verdrehen der Flanschplatte und des Greifermoduls um die Drehachse relativ zueinander bewegt.

Bei einer vorteilhaften Ausgestaltung ist ein Bajonettabschnitt, vorzugsweise der erste Bajonettabschnitt, als ringförmiger Vorsprung mit seitlich, insbesondere radial zu der Drehachse, hervorstehenden Nocken ausgebildet. Der andere Bajonettabschnitt, vorzugsweise der zweite Bajonettabschnitt, ist dann insbesondere als korrespondierende ringförmige Aufnahme mit seitlichen Nuten ausgebildet. Die Nuten sind vorzugsweise als Ringnutenabschnitte ausgebildet, welche von entsprechenden Einstecköffnungen zum Einstecken der Nocken des ersten Bajonettabschnitts begrenzt sind. Die Einstecköffnungen sind vorzugsweise derart dimensioniert, dass die Nocken des ersten Bajonettabschnitts entlang der Steckachse in die Einstecköffnungen einführbar sind. Die Ringnuten sind vorzugsweise derart ausgebildet, dass die Nocken des ersten Bajonettabschnitts in der Verriegelungskonfiguration des Bajonettverschlusses formschlüssig entlang der Steckachse betrachtet in den Ringnutenabschnitten aufgenommen sind. Vorzugsweise ist der zweite Bajonettabschnitt durch entsprechende Ausnehmungen in der Flanschplatte gebildet.

Bei einer derartigen Ausgestaltung des Bajonettverschlusses ist es ferner bevorzugt, wenn das wenigstens eine elektrische Kontaktfeld bzw. das wenigstens eine elektrische Gegenkontaktfeld in einem von dem ringförmigen Vorsprung bzw. von der ringförmigen Aufnahme umgrenzten Zentralbereich angeordnet sind. Insbesondere sind als Kontaktstifte ausgebildete Kontaktelemente bzw. Gegenkontaktelemente an demjenigen Bajonettabschnitt angeordnet, welcher als Vorsprung ausgebildet ist. Die Kontaktstifte sind dann durch den ringförmigen Vorsprung geschützt. Zu diesem Zweck ist es besonders bevorzugt, wenn eine axiale Erstreckung der Kontaktstifte entlang der Steckachse geringer ist als eine axiale Erstreckung des radialen Vorsprungs, sodass die Kontaktstifte in Steckrichtung nicht über eine äußere Kante des Vorsprungs hervorstehen.

Im Rahmen einer vorteilhaften Ausgestaltung kann das wenigstens eine elektrische Gegenkontaktfeld über wenigstens ein Kabel mit einer Anschlussbuchse des Roboterarms elektrisch verbunden oder verbindbar sein. Insbesondere umfasst das wenigstens eine Kabel mehrere Kabelstränge, wobei ein Kabelstrang jeweils einem Gegenkontaktelement zugeordnet ist. Vorzugsweise ist das wenigstens eine Kabel als Kabelschwanz ausgebildet, welcher mit einem Ende mit dem wenigstens einen elektrischen Gegenkontaktfeld elektrisch verbunden ist und welcher an seinem anderen Ende einen Stecker zur Verbindung mit einer Anschlussbuchse des Roboterarms aufweist. Das elektrische Gegenkontaktfeld kann insofern durch Austauschen des Steckers auf einfache und kostengünstige Weise mit unterschiedlich ausgebildeten Anschlussbuchsen verschiedener Robotertypen elektrisch verbunden werden.

Im Rahmen einer vorteilhaften Ausgestaltung kann das Greifermodul als Unterdruckhandhabungsmodul ausgebildet sein, wobei das Unterdruckhandhabungsmodul eine elektrische Unterdruckerzeugungseinheit und wenigstens einen pneumatisch aktivierbaren Endeffektor umfasst. Bei dem Endeffektor kann es sich insbesondere um eine Sauggreifeinheit handeln, bspw. in Form eines Elastomer-Saugers oder eines Faltenbalgsaugers. Es ist auch denkbar, dass der Endeffektor als pneumatisch aktivierbare mechanische Greifeinheit ausgebildet ist, bspw. in Form eines Fluid-Elastomer-Aktors.

Bei einer derartigen Ausgestaltung des Greifermoduls kann der zum Betätigen des wenigstens einen Endeffektors erforderliche Unterdruck von dem Greifermodul selbst erzeugt werden. Insofern müssen bei einem Wechsel des Greifermoduls insbesondere keine Unterdruckversorgungsschläuche angeschlossen werden. Es ist hingegen lediglich erforderlich, die elektrische Unterdruckerzeugungseinheit über die elektrische Kontakteinrichtung mit Strom zu versorgen. Hierdurch wird eine Installation des Greifermoduls weiter vereinfacht. Insbesondere müssen bei einer solchen Ausgestaltung somit auch keine pneumatischen Versorgungsleitungen an dem Roboter vorgehalten werden. Dies ist insbesondere von Vorteil bei einem Einsatz in autonomen Warenlagern, in denen Roboter nicht mehr stationär angeordnet sind, sondern auf entsprechenden Trägerfahrwerken autonom durch das Warenlager fahren.

Bei einer Ausgestaltung des Greifermoduls als Unterdruckhandhabungsmodul ist es ferner bevorzugt, wenn die Unterdruckerzeugungseinheit als modulare Baueinheit mit einem eigenen Modulgehäuse ausgebildet ist. Vorzugsweise ist der erste Bajonettabschnitt dann an einer Moduloberseite des Modulgehäuses angeordnet, also an derjenigen Seite des Modulgehäuses, welche in einem installierten Zustand des Greifermoduls der Flanschplatte zugewandt ist. Das Modulgehäuse ist insbesondere derart ausgebildet, dass Funktionskomponenten der Unterdruckerzeugungseinheit (bspw. Pumpeneinheit, Steuereinrichtungen, Ventile, etc.) von dem Modulgehäuse umgrenzt und somit geschützt sind. Insbesondere werden somit Störkonturen beim Greifen verringert.

Zu diesem Zweck ist es ferner bevorzugt, wenn das Modulgehäuse der Unterdruckerzeugungseinheit und die Flanschplatte im Querschnitt entlang der Steckachse betrachtet die gleiche Form und/oder die gleiche Fläche aufweisen, insbesondere auch die gleiche Außenkontur. Dann bilden die Flanschplatte und das Modulgehäuse im verbundenen Zustand eine gemeinsame Außenkontur. Eine solche Handhabungsanlage zeichnet sich durch besonders geringe Störkonturen aus, wodurch insbesondere bei einer Verwendung an einem mit einer Bedienperson kollaborierenden Roboter (sog. "cobot") ein Verletzungsrisiko für die Bedienperson verringert werden kann.

Besonders gering sind die Störkonturen dann, wenn das Modulgehäuse und die Flanschplatte zylindrisch ausgebildet sind, insbesondere im Querschnitt entlang der Steckachse betrachtet eine kreisrunde Außenkontur aufweisen. Bei einer solchen Ausgestaltung ist dann der erste Bajonettabschnitt insbesondere an einer Deckelfläche des zylindrischen Modulgehäuses angeordnet. Der Endeffektor kann an der Mantelfläche des Modulgehäuses angeordnet sein. Bevorzugt ist jedoch, wenn der Endeffektor an der der Deckelfläche gegenüberliegenden Bodenfläche des Modulgehäuses angeordnet ist.

Vorzugsweise ist ein jeweiliger Durchmesser der Flanschplatte und des Modulgehäuses im Querschnitt entlang der Steckachse betrachtet nicht größer als ein Durchmesser des Roboterarms. Insbesondere ist ein jeweiliger Durchmesser im Wesentlichen gleich, sodass der Roboterarm, die Flanschplatte und das Greifermodul im verbundenen Zustand eine gemeinsame Außenkontur bilden. Flanschplatte und Greifermodul bilden insofern einen "verlängerten Arm" des Roboters, was insbesondere beim Greifen von Gegenständen aus einem Behälter vorteilhaft ist.

Um einen Betriebszustand der Handhabungsanlage auf einfache Weise überwachen zu können, ist es ferner bevorzugt, wenn das Greifermodul eine Anzeigeeinrichtung zum Anzeigen von Betriebszuständen aufweist. Bei den Betriebszuständen kann es sich beispielsweise um einen Prozesszustand im Allgemeinen handeln (bspw. alles in Ordnung; Zustand kritisch). Ferner ist es möglich, dass die Anzeigeeinrichtung dazu ausgebildet ist, einen gegenwärtigen Unterdruck anzuzeigen. Dies ermöglicht es, eine Greifwirkung des Endeffektors zu überwachen.

Bei einer Ausgestaltung der Handhabungsanlage mit Modulgehäuse ist es besonders bevorzugt, wenn die Anzeigeeinrichtung wenigstens ein die Mantelfläche des Modulgehäuses umlaufendes Anzeigeelement, beispielsweise in Form eines LED-Bandes, umfasst. Dann kann ein Betriebszustand von allen Richtungen überwacht werden. Auch ist es denkbar, dass das Anzeigeelement dazu ausgebildet ist, Bewegungsrichtungen des Roboterarms anzuzeigen, was im Falle von kollaborierenden Robotern die Sicherheit für eine Bedienperson erhöhen kann.

Ferner ist es möglich, dass das Greifermodul eine Eingabeeinrichtung und/oder eine Auswahleinrichtung zur Eingabe und/oder zum Auswählen von Betriebsparametern aufweist. Beispielsweise ist es denkbar, dass an dem Modulgehäuse der Unterdruckerzeugungseinheit ein oder mehrere Eingabeelemente, bspw. in Form von Drucktastern oder kapazitiven Schaltflächen, angeordnet sind, mittels welchen ein von der Unterdruckerzeugungseinheit erzeugter Unterdruckwert verändert, insbesondere eingestellt, werden kann. Dies ermöglicht es einer Bedienperson, auf einfache Weise an dem Greifermodul selbst einen Greifprozess an unterschiedliche Anforderungen (bspw. in Abhängigkeit eines zu handhabenden Gegenstands) flexibel anzupassen.

Die Erfindung wird im Folgenden anhand der Figuren näher erläutert.

### Es zeigen:

- Figur 1: eine Ausführungsform einer Handhabungsanlage in einer perspektivischen Ansicht;
- Figur 2: eine Baugruppe der Handhabungsanlage gemäß Figur 1 umfassend eine Flanschplatte und ein Greifermodul in einer ersten perspektivischen Ansicht, wobei die Flanschplatte und das Greifermodul nicht miteinander verbunden sind;
- Figur 3: die Baugruppe gemäß Figur 2 in einer zweiten perspektivischen Ansicht;
- Figur 4: die Baugruppe gemäß Figur 2 in einer Seitenansicht;
- Figur 5: die Baugruppe gemäß Figur 2 in einer dritten perspektivischen Ansicht, wobei das Greifermodul und die Flanschplatte miteinander verbunden sind;
- Figur 6: die Baugruppe gemäß Figur 5 in einer Draufsicht; und
- Figur 7: eine skizzierte Darstellung eines Gegenkontaktfelds mit Gegenkontaktelementen, wobei entsprechende Positionen von korrespondierenden Kontaktelementen bei Bajonettverschluss in Steckkonfiguration (Ansicht links) und bei Bajonettverschluss 48 in Verriegelungskonfiguration (Ansicht rechts) als Kreise markiert sind.

In der nachfolgenden Beschreibung sowie in den Figuren sind für identische oder einander entsprechende Merkmale jeweils dieselben Bezugszeichen verwendet.

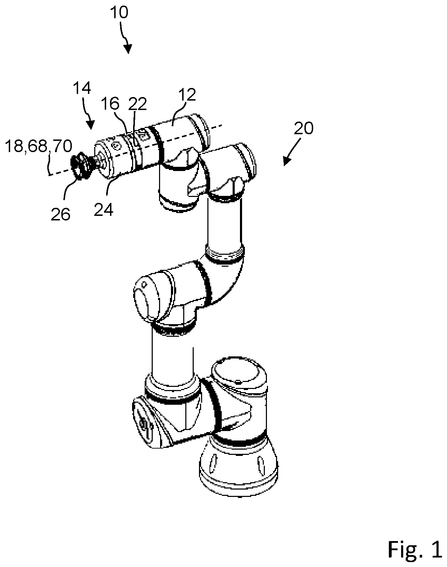

In Figur 1 ist eine Ausführungsform einer Handhabungsanlage dargestellt, welche insgesamt mit dem Bezugszeichen 10 bezeichnet ist. Die Handhabungsanlage 10 umfasst einen Roboterarm 12, ein Greifermodul 14 zum Greifen eines Gegenstands (nicht dargestellt), und eine zwischen Roboterarm 12 und Greifermodul 14 angeordnete Flanschplatte 16.

Der Roboterarm 12, die Flanschplatte 16 und das Greifermodul 14 sind, wie nachfolgend noch im Detail beschrieben, entlang einer Verbindungsachse 18 miteinander verbindbar.

Der Roboterarm 12 ist in dem dargestellten Beispiel Teil eines mehrgelenkigen Industrieroboters, welcher insgesamt mit dem Bezugszeichen 20 bezeichnet ist. Der Roboterarm 12 ist beispielhaft und bevorzugt im Wesentlichen zylindrisch ausgebildet und erstreckt sich entlang der Verbindunsgachse 18. Der Roboterarm 12 weist an seinem der Flanschplatte 16 zugewandten axialen Ende in an sich bekannter Weise einen Endflansch 22 zur Verbindung mit der Flanschplatte 16 auf (vgl. Figur 1).

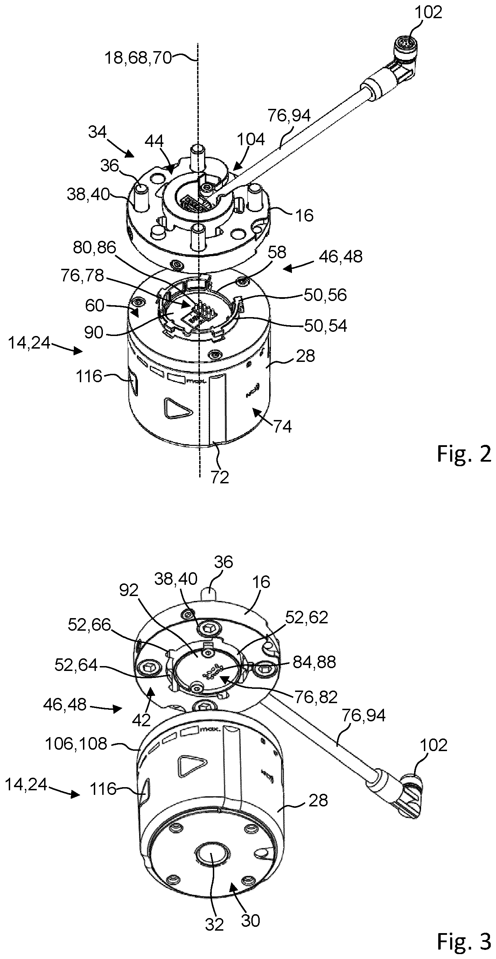

Wie aus Figur 2 ersichtlich, ist die Flanschplatte 16 ebenfalls zylindrisch ausgebildet, beispielhaft in Form einer zylindrischen Scheibe.

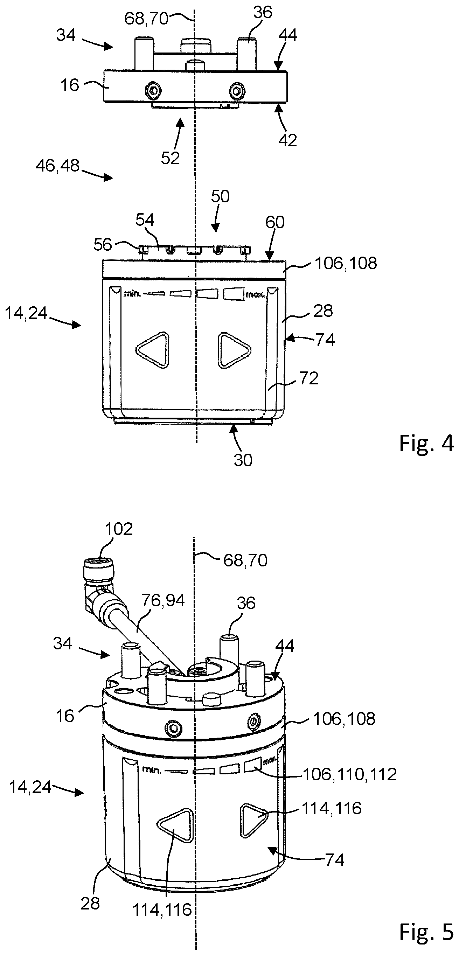

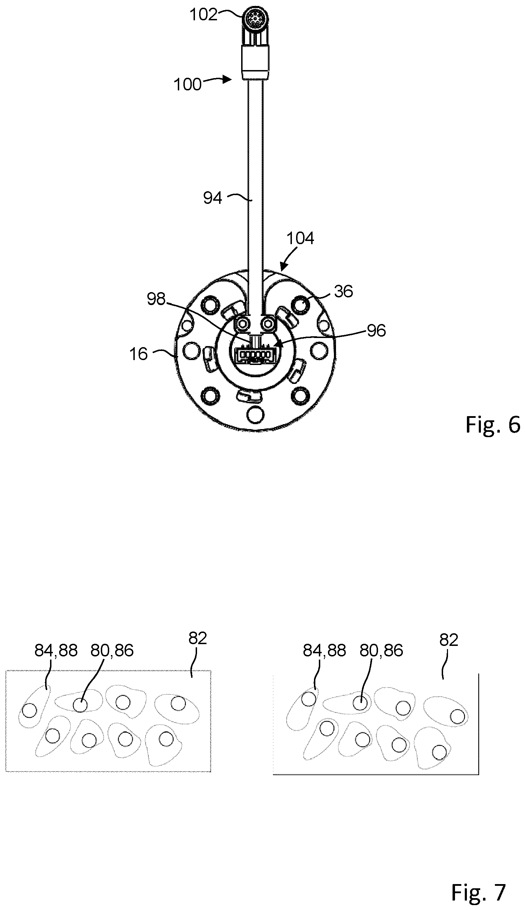

Das Greifermodul 14 ist in dem dargestellten Beispiel als Unterdruckhandhabungsmodul ausgebildet umfassend eine elektrische Unterdruckerzeugungseinheit 24 und einen pneumatisch aktivierbaren Endeffektor 26. Die Unterdruckerzeugungseinheit 24 ist als modulare Baueinheit mit einem eigenen Modulgehäuse 28 ausgebildet. Das Modulgehäuse 28 ist ebenfalls zylindrisch ausgebildet und weist im Querschnitt entlang der Verbindungsachse 18 betrachtet den im Wesentlichen gleichen Durchmesser wie die Flanschplatte 16 auf (vgl. Figur 2). Im verbundenen Zustand bilden die Flanschplatte 16 und das Modulgehäuse 28 dann eine gemeinsame Außenkontur (vgl. Figuren 5 und 6). Beispielhaft und bevorzugt entspricht ein Durchmesser der Flanschplatte 16 bzw. des Modulgehäuses 28 einem Durchmesser des Roboterarms 12. Das Greifermodul 14 und die Flanschplatte 16 bilden insofern eine Art "verlängerten Arm" des Roboters 20 (vgl. Figur 1).

Wie aus Figur 3 ersichtlich, weist die Unterdruckerzeugungseinheit 24 an einer Modulunterseite 30 (Bodenfläche) ihres Modulgehäuses 28 eine Saugöffnung 32 zur Verbindung mit dem Endeffektor 26 (in den Figuren 2 bis 6 nicht dargestellt) auf. Der Endeffektor 26 ist beispielhaft als Faltenbalgsauger ausgebildet (vgl. Figur 1). Bei nicht dargestellten Ausführungsformen kann der Endeffektor 26 auch als pneumatisch aktivierbares mechanisches Greifelement ausgebildet sein, z.B. in Form eines Fluid-Elastomer-Aktors.

Die Flanschplatte 16 ist über eine erste Verbindungseinrichtung 34 an dem Roboterarm 12 befestigbar (vgl. Figur 2). Die erste Verbindungseinrichtung 34 ist in dem dargestellten Beispiel als Schraubenverbindung umfassend mehrere Schraubenelemente 36 ausgebildet. Wie aus den Figuren 2 und 3 ersichtlich, sind die Schraubenelemente 36 in entsprechenden Schraubenaufnahmen 38 der Flanschplatte 16 aufgenommen. Beispielhaft und bevorzugt sind die Schraubenaufnahmen 38 in Form von axialen Schraubenbohrungen 40 ausgebildet, welche die Flanschplatte 16 von einer Unterseite 42 (im montierten Zustand dem Greifermodul 14 zugewandt) bis zu einer Oberseite 44 (im montierten Zustand dem Roboterarm 12 zugewandt) durchsetzen. Zur Verbindung der Flanschplatte 16 mit dem Roboterarm 12 greifen die Schraubenelemente 36 dann in an sich bekannter Weise in entsprechende Schraubenaufnahmen (nicht dargestellt) des Endflanschs 22 des Roboterarms 12 ein.

In dem dargestellten Beispiel umfasst die erste Verbindungseinrichtung 34 vier Schraubenelemente 36, welche entlang eines Umfangs um die Verbindungsachse 18 gleichmäßig verteilt angeordnet sind. Bei nicht dargestellten Ausführungsformen kann eine Anzahl und/oder eine Anordnung der Schraubenelemente 36 variieren. Insbesondere ist eine Anzahl und/oder eine Anordnung der Schraubenelemente 36 an eine vom verwendeten Robotertyp abhängige Ausgestaltung des Endflanschs 22 angepasst.

Das Greifermodul 14 ist über eine zweite Verbindungseinrichtung 46 mit der Flanschplatte 16 verbindbar. Die zweite Verbindungseinrichtung 46 ist als Bajonettverschluss 48 ausgebildet umfassend einen ersten Bajonettabschnitt 50, welcher an dem Greifermodul 14 angeordnet ist, und einen zweiten Bajonettabschnitt 52, welcher an der Flanschplatte 16 angeordnet ist (vgl. Figur 4). Wie nachfolgend im Detail erläutert sind der erste Bajonettabschnitt 50 und der zweite Bajonettabschnitt 52 entlang einer Steckachse 68 ineinander einsteckbar. Der Bajonettverschluss 48 ist dann durch gegenseitiges Verdrehen des ersten Bajonettabschnitts 50 und des zweiten Bajonettabschnitts 52 um eine entlang der Steckachse 68 verlaufende Drehachse 70 verriegelbar. Im montierten Zustand der Flanschplatte 16 an dem Roboterarm 12 entsprechen die Steckachse 68 und die Drehachse 70 der Verbindungsachse 18.

Wie aus Figur 2 ersichtlich, ist der erste Bajonettabschnitt 50 beispielhaft und bevorzugt mittig an einer der Flanschplatte 16 zugewandten Moduloberseite 60 (Deckelfläche) des Modulgehäuses 28 angeordnet. Der erste Bajonettabschnitt 50 ist als ringförmiger Vorsprung 54 ausgebildet, welcher radial zur Steckachse 68 hervorstehende Nocken 56 aufweist (vgl. Figur 2). In dem dargestellten Beispiel umfasst der ringförmige Vorsprung 54 fünf Nocken 56, welche entlang eines Umfangs um die Steckachse 68 verteilt angeordnet sind. Wie aus Figur 2 ersichtlich, weist der Vorsprung 54 abschnittsweise eine Aussparung 58 auf.

Der zweite Bajonettabschnitt 52 ist als korrespondierende ringförmige Aufnahme 62 mit sich radial zu der Steckachse 68 erstreckenden Nuten 64 ausgebildet (vgl. Figur 3). Die Nuten 64 sind als Ringnutenabschnitte ausgebildet, welche durch jeweilige Einstecköffnungen 66 zum Einstecken der Nocken 56 des ersten Bajonettabschnitts 50 voneinander getrennt sind. In dem dargestellten Beispiel sind entsprechend der Ausgestaltung des ersten Bajonettabschnitts 50 fünf Nuten 64 und fünf Einstecköffnungen 66 vorgesehen. Die Einstecköffnungen 66 sind derart dimensioniert, dass die Nocken 56 des ersten Bajonettabschnitts 50 entlang der Steckachse 68 in die Einstecköffnungen 66 eingeführt werden können. Beispielhaft und bevorzugt ist der zweite Bajonettabschnitt 52 durch entsprechende Ausnehmungen in der Flanschplatte 16 gebildet.

Zur Verriegelung des Bajonettverschlusses 48 werden die Flanschplatte 16 und das Modulgehäuse 28 zunächst derart relativ zueinander positioniert, dass die Nocken 56 des ersten Bajonettabschnitts 50 mit den korrespondierenden Einstecköffnungen 66 des zweiten Bajonettabschnitts 52 entlang der Steckachse 68 fluchten. Dann können der erste Bajonettabschnitt 50 und der zweite Bajonettabschnitt 52 entlang der Steckachse 68 ineinander eingesteckt werden (Steckkonfiguration).

Ausgehend von der Steckkonfiguration kann dann der Bajonettverschluss 48 durch gegenseitiges Verdrehen des ersten Bajonettabschnitts 50 und des zweiten Bajonettabschnitts 52 um die Drehachse 70 verriegelt werden (Verriegelungskonfiguration). Das gegenseitige Verdrehen erfolgt um einen Drehwinkel, welcher insbesondere zwischen 10° und 45°, vorzugsweise bei 15° liegt. In der Verriegelungskonfiguration liegen die Nocken 56 des ersten Bajonettabschnitts 50 formschlüssig entlang der Steckachse 68 betrachtet in den Ringnutenabschnitten 64 der Flanschplatte 16 an, sodass das Greifermodul 14 gegen ein Lösen von der Flanschplatte 16 in einer Richtung entlang der Steckachse 68 gesichert ist.

Zur Unterstützung einer Verdrehbewegung des Greifermoduls 14 um die Drehachse 70 durch eine Bedienperson kann das Modulgehäuse 28 eine oder mehrere Ausnehmungen 72 an seiner Mantelfläche 74 aufweisen, welche als Griffmulden dienen.

Das Greifermodul 14, insbesondere die Unterdruckerzeugungseinheit 24, ist über eine elektrische Kontakteinrichtung 76 mit dem Roboterarm 12 elektrisch verbunden. Die elektrische Kontakteinrichtung 76 umfasst ein elektrisches Kontaktfeld 78, welches an dem Greifermodul 14 angeordnet ist und eine Mehrzahl von Kontaktelementen 80 aufweist (vgl. Figur 2). Die elektrische Kontakteinrichtung 76 umfasst ferner ein elektrisches Gegenkontaktfeld 82, welches an der Flanschplatte 16 angeordnet ist und eine Mehrzahl von Gegenkontaktelementen 84 aufweist (vgl. Figur 3). In dem dargestellten Beispiel sind die Kontaktelemente 80 als Kontaktstifte 86, insbesondere als Federkontaktstifte, ausgebildet und die Gegenkontaktelemente 84 sind als korrespondierende Stiftaufnahmen 88 ausgebildet.

Wie aus Figur 2 ersichtlich, ist das elektrische Kontaktfeld 78 in einem von dem ringförmigen Vorsprung 54 (erster Bajonettabschnitt 50) umgrenzten Zentralbereich 90 an der Moduloberseite 60 des Modulgehäuses 28 angeordnet und mit dem Modulgehäuse 28 um die Drehachse 70 drehfest verbunden (vgl. Figur 2). Die Kontaktelemente 80 sind dabei zu der Drehachse 70 radial beabstandet angeordnet. Wie aus Figur 4 ersichtlich, ist eine axiale Erstreckung der Kontaktstifte 86 des elektrischen Kontaktfelds 78 geringer als eine axiale Erstreckung des radialen Vorsprungs 54, sodass die Kontaktstifte 86 nicht über eine äußere Kante des Vorsprungs 54 hervorstehen.

Das elektrische Gegenkontaktfeld 82 ist in einem von der ringförmigen Aufnahme 62 (zweiter Bajonettabschnitt 52) umgrenzten Zentralbereich 92 an der Unterseite 42 der Flanschplatte 16 angeordnet und mit der Flanschplatte 16 um die Drehachse 70 drehfest verbunden. Die Gegenkontaktelemente 84 sind dabei zu der Drehachse 70 radial beabstandet angeordnet.

Das elektrische Gegenkontaktfeld 82 ist über ein Kabel 94 mit einer Anschlussbuchse (nicht dargestellt) des Roboterarms 12 elektrisch verbindbar. Wie aus Figur 6 ersichtlich, ist das Kabel 94 an einem ersten Ende 96 mit dem elektrischen Gegenkontaktfeld 82 elektrisch verbunden, bspw. über eine Klemmverbindung. Insbesondere umfasst das Kabel 94 mehrere Kabelstränge 98, wobei ein Kabelstrang 98 jeweils einem Gegenkontaktelement 84 zugeordnet ist. Das Kabel 94 weist an seinem zweiten Ende 100 einen Stecker 102 auf, welcher dazu ausgebildet ist, mit der Anschlussbuchse des Roboterarms 12 verbunden zu werden. Wie aus den Figuren 2 und 6 ersichtlich, ist das Kabel 94 über eine entsprechende Ausnehmung 104 in der Flanschplatte 16 nach radial außen geführt.

Bei nicht dargestellten Ausführungsformen ist es auch möglich, dass die Gegenkontaktelemente 84 des elektrischen Gegenkontaktfelds 82 mit einem entsprechenden Anschlussfeld des Endflanschs 22 des Roboterarms 12 verbunden sind, beispielsweise über eine entlang der Verbindungsachse 18 wirksame Steckkontaktverbindung.

Ein Kontaktelement 80 (Kontaktstift 86) des elektrischen Kontaktfelds 78 ist jeweils einem Gegenkontaktelement 84 (Stiftaufnahme 88) des elektrischen Gegenkontaktfelds 82 zugeordnet. Das elektrische Kontaktfeld 78 und das elektrische Gegenkontaktfeld 82 sind derart relativ zueinander angeordnet, dass ein Kontaktelement 80 mit dem ihm zugeordneten Gegenkontaktelement 84 beim Verbinden der Flanschplatte 16 und des Greifermoduls 14 mittels des Bajonettverschlusses 48 eine elektrische Verbindung miteinander herstellen.

Beispielhaft und bevorzugt ist eine jeweilige Stiftaufnahme 88 derart flächig erstreckt, dass der ihr zugeordnete Kontaktstift 86 bereits in der Steckkonfiguration (also dann, wenn der erste Bajonettabschnitt 50 und der zweite Bajonettabschnitt 52 entlang der Steckachse 68 ineinander eingesteckt sind) in elektrischem Kontakt mit der Stiftaufnahme 88 steht und die somit ausgebildete elektrische Verbindung beim Überführen des Bajonettverschlusses 48 aus der Steckkonfiguration in die Verriegelungskonfiguration hergestellt bleibt. Vorzugsweise sind die Stiftaufnahmen 88 als Kontaktflächen mit einem entsprechenden Umriss ausgebildet. Insbesondere ist eine jeweilige Kontaktfläche derart ausgebildet, dass sie mit ihrem Umriss einen Bewegungsweg komplett einschließt, welchen der ihr zugeordnete Kontaktstift 86 beim Überführen des Bajonettverschlusses 48 aus der Steckkonfiguration in die Verriegelungskonfiguration zurücklegt. Dadurch kann sichergestellt werden, dass währen des gesamten Verriegelungsvorgangs ein elektrischer Kontakt zwischen Kontaktstift 86 und Kontaktfläche besteht.

In Figur 7 ist beispielhaft ein Gegenkontaktfeld 82 mit acht Stiftaufnahmen 88 (Gegenkontaktelemente 84) dargestellt, wobei entsprechende Positionen von korrespondierenden Kontaktstiften 86 (Kontaktelementen 80) als Kreise markiert sind. Hierbei sind die Kontaktstifte 86 in ihrer Position bei Bajonettverschluss 48 in Steckkonfiguration (in Figur 7 linkerhand) und in ihrer Position bei Bajonettverschluss 48 in Verriegelungskonfiguration (in Figur 7 rechterhand) dargestellt.

Wie aus Figur 7 ersichtlich, sind die Kontaktstifte 86 in der in Figur 7 rechterhand dargestellten Verriegelungskonfiguration ausgehend von der in Figur 7 linkerhand dargestellten Steckkonfiguration um einen Bewegungsweg im Uhrzeigersinn um die Drehachse 70 verdreht. Ein jeweiliger Bewegungsweg der Kontaktstifte 86 ist hierbei unterschiedlich, da die Kontaktstifte 86 in unterschiedlichen Abständen zu der Drehachse 70 angeordnet sind. Um trotz unterschiedlicher Bewegungswege einen sicheren elektrischen Kontakt zwischen den Kontaktstiften 86 und den korrespondierenden Stiftaufnahmen 88 herzustellen, sind die Stiftaufnahmen 88 vorzugsweise zueinander unterschiedlich ausgebildet. Insbesondere ist der Umriss einer jeweiligen Stiftaufnahme 88 individuell an den Bewegungsweg und/oder den Durchmesser des der Stiftaufnahme 88 zugeordneten Kontaktstifts 86 angepasst (vgl. Figur 7).

Grundsätzlich können die Stiftaufnahmen 88 sämtlich dieselbe Form bzw. gleiche Umrisse aufweisen, z.B. bogen- oder kreisringförmig. Es ist jedoch auch denkbar, dass die Stiftaufnahmen 88 unterschiedlich zueinander geformte Umrisse aufweisen (vgl. Figur 7). Insbesondere sind unregelmäßige Formen denkbar.

Bei nicht dargestellten Ausführungsformen können die Stiftaufnahmen 88 derart flächig erstreckt sein, dass eine Breite der Stiftaufnahme 88 entlang eines Bewegungswegs, welchen der ihr zugeordnete Kontaktstift 86 beim Überführen des Bajonettverschlusses 48 aus der Steckkonfiguration in die Verriegelungskonfiguration zurücklegt, zunimmt.

Bei der Handhabungsanlage 10 wird insofern beim Verriegeln des Bajonettverschlusses 48 sowohl eine mechanische als auch eine elektrische Verbindung zwischen dem Greifermodul 14 und der Flanschplatte 16 (und somit zwischen Greifermodul 14 und Roboterarm 12) hergestellt.

Optional kann die Handhabungsanlage 10 ferner eine Anzeigeeinrichtung 106 zum Anzeigen von Betriebszuständen aufweisen. In dem dargestellten Beispiel umfasst die Anzeigeeinrichtung 106 ein erstes Anzeigeelement 108, welches die Mantelfläche 74 des Modulgehäuses ringförmig umläuft (vgl. Figuren 4 und 5). Das erste Anzeigeelement 108 ist beispielhaft als Leuchtstreifen ausgebildet, welcher dazu ausgebildet ist, durch entsprechende Farbanzeige einen allgemeinen Prozesszustand zu visualisieren (bspw. grüne Anzeige = alles in Ordnung; rote Anzeige = Zustand kritisch). Die Anzeigeeinrichtung 106 umfasst ferner ein zweites Anzeigeelement 110 umfassend eine Mehrzahl von zueinander beabstandeten und sich in Umfangsrichtung um die Drehachse 70 im Gesamten pfeilförmig vergrößernden Anzeigeflächen 112, welche dazu ausgebildet sind, einen vorherrschenden Unterdruckwert zwischen einem minimalen Wert und einem maximalen Wert zu visualisieren.

Optional kann die Handhabungsanlage 10 ferner eine Eingabeeinrichtung 114 aufweisen, welche dazu ausgebildet ist, einen von der Unterdruckerzeugungseinheit 24 bereitgestellten Unterdruck und/oder Volumenstrom zu verändern, insbesondere stufenweise einzustellen (vgl. Figur 5). In dem dargestellten Beispiel umfasst die Eingabeeinrichtung 114 zwei Eingabeelemente 116, welche beispielhaft in Form von pfeilförmigen Drucktastern ausgebildet sind und an der Mantelfläche 74 des Modulgehäuses 28 angeordnet sind. Durch Betätigen der Eingabeelemente 116 kann ein von der Unterdruckerzeugungseinheit 24 erzeugter Unterdruck und/oder Volumenstrom, insbesondere stufenweise, erhöht bzw. erniedrigt werden, was dann von dem zweiten Anzeigeelement 110 visualisiert entsprechend visualisiert wird.

## Patentansprüche

1. Handhabungsanlage (10) zum Handhaben von Gegenständen, umfassend:
- einen Roboterarm (12) mit einem Endflansch (22);
- ein Greifermodul (14) mit wenigstens einem Endeffektor (26);
- eine zwischen Roboterarm (12) und Greifermodul (14) angeordnete Flanschplatte (16),
wobei die Flanschplatte (16) mit dem Endflansch (22) des Roboterarms (12) über eine erste Verbindungseinrichtung (34) verbunden ist, wobei die Flanschplatte (16) mit dem Greifermodul (14) über eine zweite Verbindungseinrichtung (46) verbunden ist,
wobei das Greifermodul (14) über eine elektrische Kontakteinrichtung (76) mit dem Roboterarm (12) elektrisch verbunden ist,
wobei die zweite Verbindungseinrichtung (46) als Bajonettverschluss (48) ausgebildet ist umfassend einen ersten Bajonettabschnitt (50), welcher an dem Greifermodul (14) angeordnet ist, und einen zweiten Bajonettabschnitt (52), welcher an der Flanschplatte (16) angeordnet ist, wobei der erste Bajonettabschnitt (50) und der zweite Bajonettabschnitt (52) entlang einer Steckachse (68) in eine Steckkonfiguration ineinander einsteckbar sind und wobei der Bajonettverschluss (48) nach Einstecken durch gegenseitiges Verdrehen der Flanschplatte (16) und des Greifermoduls (14) um eine Drehachse (70) zur Herstellung einer Verriegelungskonfiguration verriegelbar ist,
wobei die elektrische Kontakteinrichtung (76) wenigstens ein elektrisches Kontaktfeld (78) umfasst, welches an dem Greifermodul (14) angeordnet ist und welches mit einem elektrischen Anschluss des Greifermoduls (14) elektrisch verbunden ist,
und wobei die elektrische Kontakteinrichtung (76) wenigstens ein elektrisches Gegenkontaktfeld (82) umfasst, welches an der Flanschplatte (16) angeordnet ist und welches mit einem elektrischen Anschluss des Roboterarms (12) elektrisch verbunden ist, wobei das wenigstens eine elektrische Kontaktfeld (78) eine Mehrzahl von Kontaktelementen (80) aufweist und wobei das wenigstens eine elektrische Gegenkontaktfeld (82) eine Mehrzahl von Gegenkontaktelementen (84) aufweist, wobei ein Kontaktelement (80) jeweils einem korrespondierenden Gegenkontaktelement (84) zugeordnet ist und wobei die Kontaktelemente (80) und die Gegenkontaktelemente (84) derart ausgebildet und angeordnet sind, dass ein jeweiliges Kontaktelement (80) mit dem ihm zugeordneten Gegenkontaktelement (84) beim Überführen des Bajonettverschlusses (48) aus der Steckkonfiguration in die Verriegelungskonfiguration eine elektrische Verbindung herstellt.

2. Handhabungsanlage (10) nach Anspruch 1, wobei ein jeweiliges Kontaktelement (80) mit dem ihm zugeordneten Gegenkontaktelement (84) bereits in der Steckkonfiguration eine elektrische Verbindung herstellt und diese elektrische Verbindung beim Überführen des Bajonettverschlusses (48) aus der Steckkonfiguration in Verriegelungskonfiguration hergestellt bleibt.

3. Handhabungsanlage (10) nach einem der vorherigen Ansprüche, wobei die Kontaktelemente (80) als Kontaktstifte (86) ausgebildet sind und die Gegenkontaktelemente (84) als Stiftaufnahmen (88) ausgebildet sind oder wobei die Kontaktelemente (80) als Stiftaufnahmen (88) ausgebildet sind und die Gegenkontaktelemente (84) als Kontaktstifte (86) ausgebildet sind,
wobei eine jeweilige Stiftaufnahme (88) derart flächig erstreckt ist, dass der ihr zugeordnete Kontaktstift (86) beim Überführen des Bajonettverschlusses (48) aus der Steckkonfiguration in die Verriegelungskonfiguration in elektrischem Kontakt mit der Stiftaufnahme (88) steht, insbesondere wobei eine Breite der Stiftaufnahme (88) entlang eines Bewegungswegs, welchen der ihr zugeordnete Kontaktstift (86) beim Überführen des Bajonettverschlusses (48) aus der Steckkonfiguration in die Verriegelungskonfiguration zurücklegt, zunimmt.

4. Handhabungsanlage (10) nach einem der vorherigen Ansprüche, wobei das wenigstens eine elektrische Kontaktfeld (78) drehfest an dem Greifermodul (14) angeordnet ist und wobei das wenigstens eine elektrische Gegenkontaktfeld (82) drehfest an der Flanschplatte (16) angeordnet ist, insbesondere wobei das wenigstens eine elektrische Kontaktfeld (78) und das wenigstens eine elektrische Gegenkontaktfeld (82) zu der Drehachse (70) radial beabstandet angeordnet sind.

5. Handhabungsanlage (10) nach einem der vorherigen Ansprüche, wobei ein Bajonettabschnitt (50) als ringförmiger Vorsprung (54) mit seitlich hervorstehenden Nocken (56) ausgebildet ist und wobei der andere Bajonettabschnitt (52) als korrespondierende ringförmige Aufnahme (62) mit seitlichen Nuten (64) ausgebildet ist, wobei das wenigstens eine elektrische Kontaktfeld (78) bzw. das wenigstens eine elektrische Gegenkontaktfeld (82) in einem von dem ringförmigen Vorsprung (54) bzw. von der ringförmigen Aufnahme (62) umgrenzten Zentralbereich (90,92) angeordnet ist.

6. Handhabungsanlage (10) nach einem der vorherigen Ansprüche, wobei das wenigstens eine elektrische Gegenkontaktfeld (82) über wenigstens ein Kabel (94) mit einer Anschlussbuchse des Roboterarms (12) elektrisch verbunden ist.

7. Handhabungsanlage (10) nach einem der vorherigen Ansprüche, wobei das Greifermodul (14) als Unterdruckhandhabungsmodul ausgebildet ist mit einer elektrischen Unterdruckerzeugungseinheit (24) und wenigstens einem pneumatisch aktivierbaren Endeffektor (26).

8. Handhabungsanlage (10) nach Anspruch 7, wobei die Unterdruckerzeugungseinheit (24) als Baueinheit mit einem eigenen Modulgehäuse (28) ausgebildet ist, insbesondere wobei der erste Bajonettabschnitt (50) an einer Moduloberseite (60) des Modulgehäuses (28) angeordnet ist.

9. Handhabungsanlage (10) nach Anspruch 8, wobei das Modulgehäuse (28) und die Flanschplatte (16) im Querschnitt entlang der Steckachse (68) betrachtet die gleiche Form und/oder die gleiche Fläche aufweisen, insbesondere auch die gleiche Außenkontur aufweisen.

10. Handhabungsanlage (10) nach einem der Ansprüche 8 oder 9, wobei das Modulgehäuse (28) und die Flanschplatte (16) zylindrisch ausgebildet sind.

11. Handhabungsanlage (10) nach einem der vorherigen Ansprüche, wobei das Greifermodul (14) eine Anzeigeeinrichtung (106) zum Anzeigen von Betriebszuständen und/oder eine Eingabeeinrichtung (114) zur Eingabe von Betriebsparametern aufweist.

## Claims

1. A handling system (10) for handling objects, comprising:
- a robot arm (12) with an end flange (22);
- a gripper module (14) with at least one end effector (26) ;
- a flange plate (16) arranged between the robot arm (12) and the gripper module (14),
wherein the flange plate (16) is connected to the end flange (22) of the robot arm (12) via a first connecting apparatus (34),
wherein the flange plate (16) is connected to the gripper module (14) via a second connecting apparatus (46),
wherein the gripper module (14) is electrically connected to the robot arm (12) via an electrical contact device (76),
wherein the second connecting apparatus (46) is designed as a bayonet catch (48) comprising a first bayonet portion (50) which is arranged on the gripper module (14) and a second bayonet portion (52) which is arranged on the flange plate (16), wherein the first bayonet portion (50) and the second bayonet portion (52) are insertable into one another along a quick-release axle (68) in a plug-in configuration, and wherein the bayonet lock (48) is lockable after insertion by mutual rotation of the flange plate (16) and the gripper module (14) about an axis of rotation (70) for production of a locking configuration,
wherein the electrical contact apparatus (76) comprises at least one electrical contact panel (78) which is arranged on the gripper module (14) and which is electrically connected to an electrical connection of the gripper module (14),
and wherein the electrical contact apparatus (76) comprises at least one electrical mating contact field (82) which is arranged on the flange plate (16) and which is electrically connected to an electrical connection of the robot arm (12), wherein the at least one electrical contact field (78) comprises a plurality of contact elements (80) and wherein the at least one electrical mating contact field (82) comprises a plurality of mating contact elements (84) wherein a contact element (80) is associated with a corresponding mating contact element (84) in each case, and wherein the contact elements (80) and the mating contact elements (84) are designed and arranged in such a way that a respective contact element (80) establishes an electrical connection with the mating contact element (84) associated therewith when the bayonet catch (48) is transferred from the plug-in configuration to the locking configuration.

2. The handling system (10) according to claim 1, wherein a respective contact element (80) with its associated mating contact element (84) already establishes an electrical connection in the plug-in configuration and this electrical connection remains established when the bayonet lock (48) is transferred from the plug-in configuration to the locking configuration.

3. The handling system (10) according to any of the preceding claims, wherein the contact elements (80) are designed as contact pins (86) and the mating contact elements (84) are designed as pin receptacles (88), or wherein the contact elements (80) are designed as pin receptacles (88) and the mating contact elements (84) are designed as contact pins (86),
wherein a respective pin receptacle (88) is extended in a planar manner in such a manner that the contact pin (86) associated therewith is in electrical contact with the pin receptacle (88) when the bayonet lock (48) is transferred from the plug-in configuration into the locking configuration, in particular wherein a width of the pin receptacle (88) increases along a path of movement which the contact pin (86) associated therewith covers when the bayonet lock (48) is transferred from the plug-in configuration into the locking configuration.

4. The handling system (10) according to any of the preceding claims, wherein the at least one electrical contact field (78) is arranged non-rotatably on the gripper module (14) and wherein the at least one electrical mating contact field (82) is arranged non-rotatably on the flange plate (16), in particular wherein the at least one electrical contact field (78) and the at least one electrical mating contact field (82) are arranged radially spaced from the axis of rotation (70).

5. The handling system (10) according to any of the preceding claims, wherein one bayonet portion (50) is designed as an annular protrusion (54) with laterally projecting cams (56) and wherein the other bayonet portion (52) is designed as a corresponding annular receptacle (62) with lateral notches (64), wherein the at least one electrical contact field (78) or the at least one electrical counter-contact field (82) being arranged in a central area (90, 92) delimited by the annular protrusion (54) or by the annular receptacle (62) .

6. The handling system (10) according to any of the preceding claims, wherein the at least one electrical mating contact field (82) is electrically connected to a connection socket of the robot arm (12) via at least one cable (94).

7. The handling system (10) according to any of the preceding claims, wherein the gripper module (14) is designed as a vacuum handling module with an electrical vacuum generating unit (24) and at least one pneumatically activatable end effector (26).

8. The handling system (10) according to claim 7, wherein the vacuum generating unit (24) is designed as a structural unit with its own module housing (28), in particular wherein the first bayonet portion (50) is arranged on a module top side (60) of the module housing (28).

9. The handling system (10) according to claim 8, wherein the module housing (28) and the flange plate (16) have the same shape and/or the same surface when viewed in cross-section along the quick-release axle (68), in particular also have the same outer contour.

10. The handling system (10) according to any of claims 8 or 9, wherein the module housing (28) and the flange plate (16) are cylindrically designed.

11. The handling system (10) according to any of the preceding claims, wherein the gripper module (14) has a display apparatus (106) for displaying operating states and/or an input apparatus (114) for inputting operating parameters.

## Revendications

1. Installation de manipulation (10) pour manipuler des objets, comprenant:
- un bras robotisé (12) avec une bride d'extrémité (22) ;
- un module de préhension (14) avec au moins un effecteur terminal (26);
- une plaque à bride (16) disposée entre le bras robotisé (12) et le module de préhension (14),
dans laquelle la plaque à bride (16) est reliée à la bride d'extrémité (22) du bras robotisé (12) par l'intermédiaire d'un premier dispositif de liaison (34),
dans laquelle la plaque à bride (16) est reliée au module de préhension (14) par l'intermédiaire d'un deuxième dispositif de liaison (46),
dans laquelle le module de préhension (14) est relié électriquement au bras robotisé (12) par l'intermédiaire d'un dispositif de mise en contact électrique (76),
dans laquelle le deuxième dispositif de liaison (46) est réalisé sous la forme d'une fermeture à baïonnette (48) comprenant une première partie formant baïonnette (50), laquelle est disposée sur le module de préhension (14), et une deuxième partie formant baïonnette (52), laquelle est disposée sur la plaque à bride (16), dans laquelle la première partie formant baïonnette (50) et la deuxième partie formant baïonnette (52) peuvent être introduites l'une dans l'autre le long d'un axe d'introduction (68) dans une configuration d'introduction et dans laquelle la fermeture à baïonnette (48) après l'introduction peut être verrouillée par rotation mutuelle de la plaque à bride (16) et du module de préhension (14) autour d'un axe de rotation (70) pour l'obtention d'une configuration de liaison,
dans laquelle le dispositif de mise en contact électrique (76) comprend au moins un champ de contact électrique (78), lequel est disposé sur le module de préhension (14) et lequel est relié électriquement à une connexion électrique du module de préhension (14),
et dans laquelle le dispositif de mise en contact électrique (76) comprend au moins un champ de contact complémentaire électrique (82), lequel est disposé sur la plaque à bride (16) et lequel est relié à une connexion électrique du bras robotisé (12), dans laquelle le au moins un champ de contact électrique (78) présente une pluralité d'éléments de contact (80) et dans laquelle le au moins un champ de contact complémentaire électrique (82) présente une pluralité d'éléments de contact complémentaires (84), dans laquelle un élément de contact (80) est associé à respectivement un élément de contact complémentaire (84) correspondant et dans laquelle les éléments de contact (80) et les éléments de contact complémentaires (84) sont réalisés et disposés de telle sorte qu'un élément de contact (80) respectif avec l'élément de contact complémentaire (84) associé à celui-ci lors du passage de la fermeture à baïonnette (48) à partir de la configuration d'introduction dans la configuration de verrouillage établit une liaison électrique.

2. Installation de manipulation (10) selon la revendication 1, dans laquelle un élément de contact (80) respectif avec l'élément de contact complémentaire (84) associé à celui-ci établit déjà dans la configuration d'introduction une liaison électrique et cette liaison électrique lors du passage de la fermeture à baïonnette (48) à partir de la configuration d'introduction dans la configuration de verrouillage reste établie.

3. Installation de manipulation (10) selon l'une quelconque des revendications précédentes, dans laquelle les éléments de contact (80) sont réalisés sous la forme de broches de contact (86) et les éléments de contact complémentaires (84) sont réalisés sous la forme de logements de broche (88) ou dans laquelle les éléments de contact (80) sont réalisés sous la forme de logements de broche (88) et les éléments de contact complémentaires (84) sont réalisés sous la forme de broches de contact (86),
dans laquelle un logement de broche (88) respectif est étendu à plat de telle sorte que la broche de contact (86) associée à celui-ci lors du passage de la fermeture à baïonnette (48) à partir de la configuration d'introduction dans la configuration de verrouillage est en contact électrique avec le logement de broche (88), en particulier dans laquelle une largeur du logement de broche (88) augmente le long d'une voie de déplacement que la broche de contact (86) associée à celui-ci parcourt lors du passage de la fermeture à baïonnette (48) à partir de la configuration d'introduction dans la configuration de verrouillage.

4. Installation de manipulation (10) selon l'une quelconque des revendications précédentes, dans laquelle le au moins un champ de contact électrique (78) est disposé de manière solidaire en rotation sur le module de préhension (14) et dans laquelle le au moins un champ de contact complémentaire électrique (82) est disposé de manière solidaire en rotation sur la plaque à bride (16), en particulier dans laquelle le au moins un champ de contact électrique (78) et le au moins un champ de contact complémentaire électrique (82) sont disposés de manière radialement espacée par rapport à l'axe de rotation (70).

5. Installation de manipulation (10) selon l'une quelconque des revendications précédentes, dans laquelle une partie formant baïonnette (50) est réalisée sous la forme d'une partie saillante annulaire (54) avec des cames (56) faisant saillie latéralement et dans laquelle l'autre partie formant baïonnette (52) est réalisée sous la forme d'un logement annulaire (62) correspondant avec des rainures (64) latérales, dans laquelle le au moins un champ de contact électrique (78) ou le au moins un champ de contact complémentaire électrique (82) est disposé dans une zone centrale (90, 92) délimitée par la partie saillante annulaire (54) ou par le logement annulaire (62).

6. Installation de manipulation (10) selon l'une quelconque des revendications précédentes, dans laquelle le au moins un champ de contact complémentaire électrique (82) est relié électriquement par l'intermédiaire d'au moins un câble (94) à une douille de connexion du bras robotisé (12).

7. Installation de manipulation (10) selon l'une quelconque des revendications précédentes, dans laquelle le module de préhension (14) est réalisé sous la forme d'un module de manipulation sous vide avec une unité de génération de vide (24) électrique et au moins un effecteur terminal (26) pouvant être activé pneumatiquement.

8. Installation de manipulation (10) selon la revendication 7, dans laquelle l'unité de génération de vide (24) est réalisée sous la forme d'une unité modulaire avec un boîtier de module (28) propre, en particulier dans laquelle la première partie formant baïonnette (50) est disposée sur une face supérieure de module (60) du boîtier de module (28).

9. Installation de manipulation (10) selon la revendication 8, dans laquelle le boîtier de module (28) et la plaque à bride (16) présentent en vue en coupe transversale le long de l'axe d'introduction (68) la même forme et/ou la même surface, en particulier présentent également le même contour extérieur.

10. Installation de manipulation (10) selon l'une quelconque des revendications 8 ou 9, dans laquelle le boîtier de module (28) et la plaque à bride (16) sont réalisés de manière cylindrique.

11. Installation de manipulation (10) selon l'une quelconque des revendications précédentes, dans laquelle le module de préhension (14) présente un dispositif d'affichage (106) pour afficher des états de fonctionnement et/ou un dispositif d'entrée (114) pour entrer des paramètres de fonctionnement.
